# EUROPEAN PATENT APPLICATION

(11) **EP 3 273 336 A1**
(43) Date of publication of application: **24.01.2018**
(21) Application number: 15888782.8
(22) Date of filing: 14.04.2015
(51) Int. Cl.: G06F 3/0488

(54) **WEARABLE DEVICE, AND TOUCHSCREEN, TOUCH OPERATION METHOD, AND GRAPHICAL USER INTERFACE THEREOF**

(71) Applicant: HUAWEI TECHNOLOGIES CO., LTD., Guangdong 518129 (CN)
(72) Inventor: DING, Yi, Shenzhen Guangdong 518129 (CN)
(74) Representative: Maiwald Patentanwalts GmbH
(86) International application number: PCT/CN2015/076586
(87) International publication number: WO 2016/165077

(57) **Abstract**

A wearable device, a touchscreen thereof, a touch operation method thereof, and a graphical user interface thereof are disclosed. The method includes: receiving a continuous slide for operating a particular touch area, and generating a continuous-slide signal, where the particular touch area is near a periphery of a touchscreen of the wearable device, and the particular touch area is a part of the touchscreen (S101); and continuously adjusting at least one function of the wearable device according to the continuous-slide signal (S102). A particular touch area is disposed around the touchscreen, so that the wearable device conforms to an operation habit of a user, and a length of a control area is maximized. It is convenient for the user to continuously adjust at least one function of the wearable device more accurately.

## Description

### TECHNICAL FIELD

Embodiments of the present invention relate to electronic device technologies, and in particular, to a wearable device, a touchscreen of a wearable device, a touch operation method for a wearable device, a graphical user interface of a wearable device, and a computer program for executing the touch operation method.

### BACKGROUND

With constant development of intelligent wearable device technologies, there are more types of wearable device products with various increasingly-powerful functions, for example, watches, hand rings, glasses, rings, and smart necklaces. A physical crown is always disposed on a side of a conventional smart watch. The physical crown is used to adjust time and control content on an interface, and the like. However, to design a physical crown, a physical element needs to be added, and manufacturing costs are increased. In addition, a physical crown is usually relatively small, it is inconvenient for a user to operate the physical crown, and preciseness of adjustment is also affected.

### SUMMARY

Embodiments of the present invention provide a wearable device, a touchscreen of a wearable device, a touch operation method for a wearable device, a graphical user interface of a wearable device, and a computer program for executing the touch operation method, so that a user can control multiple functions of the wearable device more conveniently and more precisely.

According to a first aspect, a touch operation method for a wearable device is provided, where the method includes: receiving a continuous slide for operating a particular touch area, and generating a continuous-slide signal, where the particular touch area is near a periphery of a touchscreen of the wearable device, and the particular touch area is a part of the touchscreen; and continuously adjusting at least one function of the wearable device according to the continuous-slide signal.

In a first possible implementation manner of the first aspect, the receiving a continuous slide for operating a particular touch area includes: receiving a slide operation of a user, and generating a slide operation signal; parsing the slide operation signal, to obtain slide coordinates; and determining, according to the slide coordinates, that the user performs a continuous-slide operation on the particular touch area.

In a second possible implementation manner of the first aspect, before the receiving a continuous slide for operating a particular touch area, the method includes: controlling the wearable device to disable a touch function of a non-particular touch area.

With reference to the first aspect or either of the foregoing possible implementation manners of the first aspect, in a third possible implementation manner of the first aspect, the particular touch area is a closed or semi-closed area surrounding the periphery of the touchscreen of the wearable device.

With reference to the first aspect or any one of the foregoing possible implementation manners of the first aspect, in a fourth possible implementation manner of the first aspect, the particular touch area is disposed outside an edge of a display area of the touchscreen, and the particular touch area does not display content; or
the particular touch area is disposed inside an edge of a display area of the touchscreen, and the particular touch area displays content.

With reference to the first aspect or any one of the foregoing possible implementation manners of the first aspect, in a fifth possible implementation manner of the first aspect, before the receiving a continuous slide for operating a particular touch area, the method further includes: activating the particular touch area according to an input operation of the user, where the activating the particular touch area includes one of the following manners: when determining that a slide track of the user is a specified slide track on the particular touch area, activating the particular touch area; when determining that a startpoint of a slide track of the user is a specified point and coordinates of the slide track are located on the particular touch area, activating the particular touch area; activating the particular touch area by tapping any point or a specified location of the particular touch area for a specified quantity of times; when determining that a specified virtual key or a mechanical button is pressed, activating the particular touch area; or automatically activating the particular touch area during power-on.

With reference to the first aspect or any one of the foregoing possible implementation manners of the first aspect, in a sixth possible implementation manner of the first aspect, the continuously adjusting at least one function of the wearable device according to the continuous-slide signal includes at least one of the following manners: continuously controlling to scale up/down or switch content on an interface according to the continuous-slide signal; continuously controlling navigation of a menu list according to the continuous-slide signal; continuously adjusting an audio/video playback progress or volume according to the continuous-slide signal; or continuously adjusting a displayed system time according to the continuous-slide signal.

According to a second aspect, a wearable device is provided, where the wearable device includes: an input module, configured to: receive a continuous slide for operating a particular touch area, and generate a continuous-slide signal, where the particular touch area is near a periphery of a touchscreen of the wearable device, and the particular touch area is a part of the touchscreen; and an execution module, configured to continuously adjust at least one function of the wearable device according to the continuous-slide signal.

In a first possible implementation manner of the second aspect, the input module further includes: a receiving submodule, a parsing submodule, and a determining submodule, where the receiving submodule receives a slide operation of a user, and generates a slide operation signal; the parsing submodule parses the slide operation signal, to obtain slide coordinates; and the determining submodule determines, according to the slide coordinates, that the user performs a continuous-slide operation on the particular touch area.

In a second possible implementation manner of the second aspect, the input module further includes a control submodule, where the control submodule is configured to: before the input module receives the continuous slide for operating the particular touch area, control the wearable device to disable a touch function of a non-particular touch area.

With reference to the second aspect or either of the foregoing possible implementation manners of the second aspect, in a third possible implementation manner of the second aspect, the particular touch area is a closed or semi-closed area surrounding the periphery of the touchscreen of the wearable device.

With reference to the second aspect or any one of the foregoing possible implementation manners of the second aspect, in a fourth possible implementation manner of the second aspect, the particular touch area is disposed outside an edge of a display area of the touchscreen, and the particular touch area does not display content; or
the particular touch area is disposed inside an edge of a display area of the touchscreen, and the particular touch area displays content.

With reference to the second aspect or any one of the foregoing possible implementation manners of the second aspect, in a fifth possible implementation manner of the second aspect, the wearable device further includes an activation module, where the activation module activates the particular touch area according to an input operation of the user, and the activation module activates the particular touch area in one of the following manners: when determining that a slide track of the user is a specified slide track on the particular touch area, activating the particular touch area; when determining that a startpoint of a slide track of the user is a specified point and coordinates of the slide track are located on the particular touch area, activating the particular touch area; activating the particular touch area by tapping any point or a specified location of the particular touch area for a specified quantity of times; when determining that a specified virtual key or a mechanical button is pressed, activating the particular touch area; or automatically activating the particular touch area during power-on.

With reference to the second aspect or any one of the foregoing possible implementation manners of the second aspect, in a sixth possible implementation manner of the second aspect, the continuously adjusting, by the execution module, at least one function of the wearable device according to the continuous-slide signal includes at least one of the following manners: continuously controlling, by the execution module, to scale up/down or switch content on an interface according to the continuous-slide signal; continuously controlling, by the execution module, navigation of a menu list according to the continuous-slide signal; continuously adjusting, by the execution module, an audio/video playback progress or volume according to the continuous-slide signal; or continuously adjusting a displayed system time according to the continuous-slide signal.

According to a third aspect, a wearable device is provided, where the wearable device includes a processor and a touchscreen, where the touchscreen is connected to the processor by using a data bus; and the touchscreen receives a continuous slide for operating a particular touch area, and generates a continuous-slide signal, where the particular touch area is near a periphery of the touchscreen of the wearable device, and the particular touch area is a part of the touchscreen; and the processor continuously adjusts at least one function of the wearable device according to the continuous-slide signal.

In a first possible implementation manner of the third aspect, the touchscreen receives a slide operation of a user; and the processor parses the slide operation signal, to obtain slide coordinates, and determines, according to the slide coordinates, that the user performs a continuous-slide operation on the particular touch area.

In a second possible implementation manner of the third aspect, before the touchscreen receives the continuous slide for operating the particular touch area, the processor disables a touch function of a non-particular touch area of the touchscreen.

With reference to the third aspect or either of the foregoing possible implementation manners of the third aspect, in a third possible implementation manner of the third aspect, the particular touch area is a closed or semi-closed area surrounding the periphery of the touchscreen of the wearable device.

With reference to the third aspect or any one of the foregoing possible implementation manners of the third aspect, in a fourth possible implementation manner of the third aspect, the particular touch area is disposed outside an edge of a display area of the touchscreen, and the particular touch area does not display content; or
the particular touch area is disposed inside an edge of a display area of the touchscreen, and the particular touch area displays content.

With reference to the third aspect or any one of the foregoing possible implementation manners of the third aspect, in a fifth possible implementation manner of the third aspect, the processor further activates the particular touch area according to a touch operation of the user, where the activating the particular touch area includes one of the following manners: when determining that a slide track of the user is a specified slide track on the particular touch area, activating the particular touch area; when determining that a startpoint of a slide track of the user is a specified point and coordinates of the slide track are located on the particular touch area, activating the particular touch area; activating the particular touch area by tapping any point or a specified location of the particular touch area for a specified quantity of times; when determining that a specified virtual key or a mechanical button is pressed, activating the particular touch area; or automatically activating the particular touch area during power-on.

With reference to the third aspect or any one of the foregoing possible implementation manners of the third aspect, in a sixth possible implementation manner of the third aspect, the continuously adjusting, by the processor, at least one function of the wearable device according to the continuous-slide signal includes at least one of the following manners: continuously controlling, by the processor, to scale up/down or switch content on an interface according to the continuous-slide signal; continuously controlling navigation of a menu list according to the continuous-slide signal; continuously adjusting an audio/video playback progress according to the continuous-slide signal; or continuously adjusting a displayed system time according to the continuous-slide signal.

According to a fourth aspect, a computer program is provided, where the computer program includes an instruction, where the instruction enables the wearable device to execute the touch operation method according to the first aspect or any one of the possible implementation manners of the first aspect.

According to a fifth aspect, a graphical user interface GUI of a wearable device is provided, where the wearable device receives a user operation of continuous sliding on a particular touch area, where the particular touch area is near a periphery of a touchscreen of the wearable device, and the particular touch area is a part of the touchscreen; and the wearable device continuously controls a continuous display change of the GUI according to the continuous-slide signal.

In a first possible implementation manner of the fifth aspect, the continuously controlling, by the wearable device, a continuous display change of the GUI according to the continuous-slide signal includes at least one of the following manners: controlling to continuously scale up/down or switch content on the interface according to the continuous-slide signal; controlling continuous navigation of a menu list according to the continuous-slide signal; controlling to continuously prompt an audio/video playback progress or to continuously prompt an adjustment of an audio/video playback volume according to the continuous-slide signal; or continuously controlling, according to the continuous-slide signal, a continuous adjustment process of a displayed system time.

With reference to the fifth aspect or the first possible implementation manner of the fifth aspect, in a second possible implementation manner of the fifth aspect, when the wearable device continuously controls the navigation of the menu list according to the continuous-slide signal, the wearable device controls the current menu list to be arranged near a periphery of a display area of the touchscreen, so that each menu item has an equal distance to an edge of the display area.

With reference to the fifth aspect or either of the possible implementation manners of the fifth aspect, in a third possible implementation manner of the fifth aspect, the particular touch area is disposed outside the edge of the display area of the touchscreen, and the particular touch area does not display content; or
the particular touch area is disposed inside the edge of the display area of the touchscreen, and the particular touch area displays content.

According to a sixth aspect, a touchscreen is provided, where the touchscreen is applied to a wearable device, and the touchscreen is provided with a particular touch area, where the particular touch area is near a periphery of the touchscreen, and the particular touch area is a part of the touchscreen; and the touchscreen receives a continuous slide for operating the particular touch area, and generates a continuous-slide signal, so that the wearable device continuously adjusts at least one function of the wearable device according to the continuous-slide signal.

In a first possible implementation manner of the sixth aspect, the particular touch area is a closed or semi-closed area surrounding the periphery of the touchscreen.

With reference to the sixth aspect or the first possible implementation manner of the sixth aspect, in a second possible implementation manner of the sixth aspect, the particular touch area is disposed outside an edge of a display area of the touchscreen, and the particular touch area does not display content; or
the particular touch area is disposed inside an edge of a display area of the touchscreen, and the particular touch area displays content.

According to the foregoing aspects of the embodiments of the present invention, a particular touch area is disposed on a periphery of a touchscreen of a wearable device, so that a user may perform a slide operation on the particular touch area and controls an interface display change or a progress of application software. A length of a control area is maximized by disposing the particular touch area. It is convenient for the user to control the interface change or the progress of the application program more accurately, so as to conform to an operation habit of the user.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an overall schematic diagram of a wearable device according to an embodiment of the present invention;
FIG. 2 is a schematic architectural diagram of hardware of a wearable device according to an embodiment of the present invention;
FIG. 3A and FIG. 3B are schematic diagrams of a particular touch area of a wearable device according to an embodiment of the present invention;
FIG. 4 is a schematic diagram of another form of a particular touch area of a wearable device according to an embodiment of the present invention;
FIG. 5 is a schematic diagram of scaling up/down an icon interface of a wearable device according to an embodiment of the present invention;
FIG. 6 is a schematic diagram of controlling menu navigation on a wearable device according to an embodiment of the present invention;
FIG. 7A and FIG. 7B are schematic diagrams of controlling an audio/video volume and progress on a wearable device according to an embodiment of the present invention;
FIG. 8A and FIG. 8B are schematic diagrams of controlling system time adjustment on a wearable device according to an embodiment of the present invention;
FIG. 9 is a flowchart of a touch operation method for a wearable device according to an embodiment of the present invention;
FIG. 10 is a module diagram of a wearable device according to an embodiment of the present invention; and
FIG. 11 is a module diagram of a wearable device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the embodiments of the present invention, a wearable device and a touch operation method for the wearable device are described. The wearable device may be a wearable device having a display screen, such as a smart watch, a smart band, or a smart necklace. In the embodiments, the technical solutions for implementing the present invention are described in detail by using a smart watch as an example. A touchscreen of the smart watch may be any shape, for example, may be a regular circle, an approximate circle, or a square. For ease of description herein, the display screen of the smart watch is defined as a regular circle. Certainly, the shape of the display screen of the wearable device is not limited in the embodiments of the present invention. Different manufacturers may customize different shapes of display screens according to market requirements.

Currently, a user controls an interface of a wearable device or a progress of application software of a wearable device by using a mechanical knob, for example, a crown of a smart watch. Usually limited by a size of the wearable device, the knob is relatively small. It is inconvenient for the user to perform an operation, and it is also difficult to ensure preciseness of control. In addition, the mechanical knob increases design costs. In consideration of the foregoing problems, in the embodiments of the present invention, a particular touch area is disposed on a periphery of a touchscreen of a wearable device, so that a user may perform a slide operation on the particular touch area and control an interface display change or a progress of application software. A length of a control area is maximized by disposing the particular touch area. It is convenient for the user to control the interface change or the progress of the application program more accurately, so as to conform to an operation habit of the user.

How to resolve the foregoing problems is further described below by using specific embodiments.

### Embodiment 1

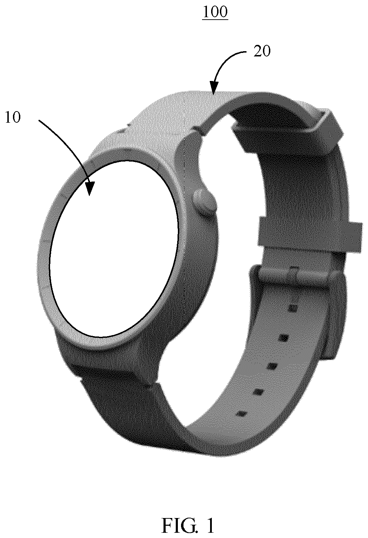

FIG. 1 is an overall schematic diagram of a wearable device according to this embodiment of the present invention.

The wearable device 100 may include a body 10 and a bearing portion 20. The body 10 and the bearing portion 20 may be fixedly connected to each other or may be detachably connected to each other. A user may wear the bearing portion 20.

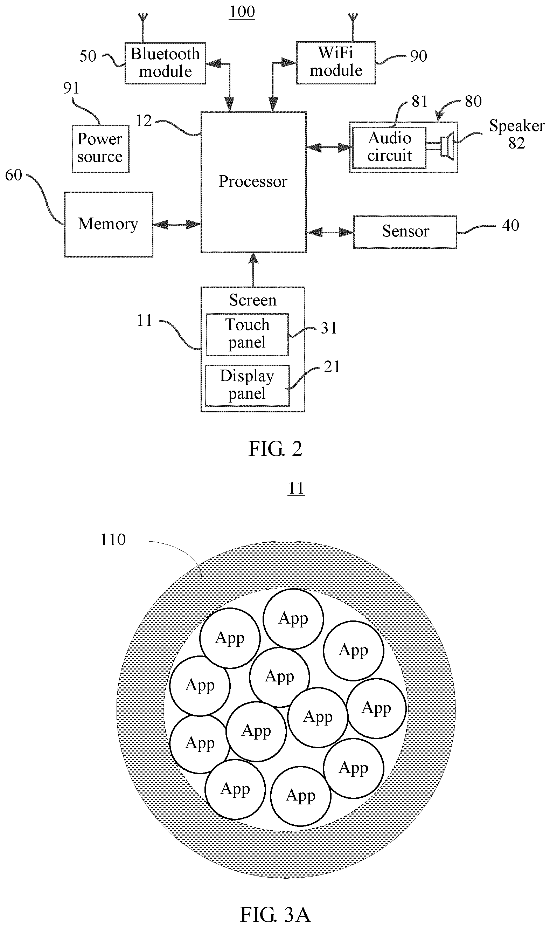

Further, FIG. 2 is a schematic structural diagram of hardware of the wearable device according to this embodiment of the present invention. The body 10 includes at least a touchscreen 11 and at least one processor 12. The processor 12 controls display of the touchscreen 11. A periphery of the touchscreen 11 is provided with a particular touch area 110. The particular touch area is a part of the touchscreen. The processor 12 receives, by using the touchscreen 11, a continuous-slide operation signal generated when the user operates the particular touch area. The processor continuously adjusts at least one function of the wearable device according to the continuous-slide signal.

In this embodiment of the present invention, a particular touch area is disposed around a touchscreen, so that the wearable device conforms to an operation habit of a user, and a length of a control area is maximized. It is convenient for the user to continuously adjust a corresponding function more accurately.

How to dispose the particular touch area is further described below.

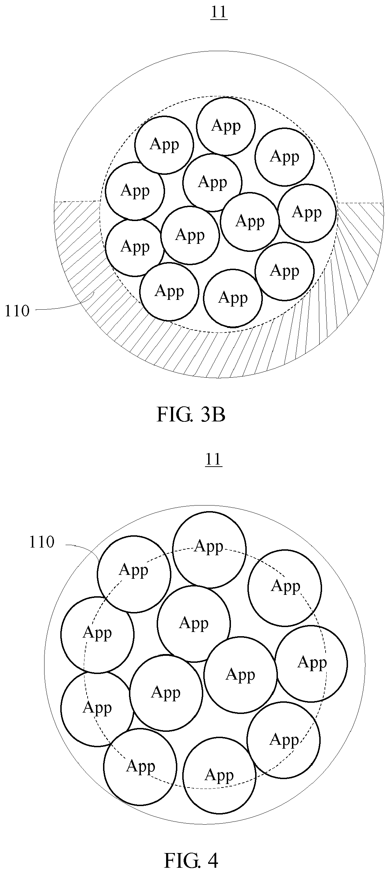

Specifically, as shown in FIG. 3A and FIG. 3B, the particular touch area 110 may be a closed area (FIG. 3A) surrounding the periphery of the touchscreen of the wearable device, or may be a semi-closed area (FIG. 3B), or may be a touch area that is disposed in this area in another manner. The particular touch areas in FIG. 3A and FIG. 3B are disposed in an annular manner, and are merely examples given in this embodiment for descriptions. A shape of this area is not limited to an annular shape, and may be another shape.

Further or optionally, a distance between any touch point of the particular touch area and an edge of the touchscreen 11 is not greater than a specified threshold. The specified threshold may not exceed a half, one third, a quarter, or the like of a distance between a center of a display area of the touchscreen and the edge of the touchscreen 11.

It should be noted that the particular touch area 110 is a part of the touchscreen 11. The particular touch area 110 may be disposed outside an edge of a display area 112 of the touchscreen 11, and the particular touch area 110 does not display content and is merely configured to receive a touch operation of the user, as shown in FIG. 3A.

Alternatively, the particular touch area 110 may be disposed inside an edge of a display area 112 of the touchscreen 11. In this case, the particular touch area 110 is a part of the display area 112, and may display content on an interface. As shown in FIG. 4, for ease of understanding, an area between the edge of the screen and the dashed line shows the particular touch area 110. An actual display interface does not have the dashed line frame of the particular touch area.

It should be noted that the particular touch area 110 inside the edge is nearer the center of the display area 112 than the particular touch area 110 outside the edge.

An implementation principle of the touch operation of the wearable device is further described according to the particular touch area defined above and by using hardware of the wearable device.

Optionally, the touchscreen 11 receives a slide operation of the user. The processor 12 may parse the slide operation signal, to obtain slide coordinates; and determine, according to the slide coordinates, that the user performs a continuous-slide operation on the particular touch area. Further, the processor 12 continuously adjusts at least one function of the wearable device according to the continuous-slide signal.

Optionally, before the touchscreen 11 receives the continuous slide for operating the particular touch area 110, the processor 12 disables a touch function of a non-particular touch area of the touchscreen. Specifically, when the touch function of the non-particular touch area is disabled, the touchscreen 11 does not generate a touch operation signal, and the processor 12 cannot receive the touch operation signal. Alternatively, when the touch function of the non-particular touch area is disabled, the touchscreen 11 may still generate a touch operation signal. The processor 12 determines, according to the touch operation signal, that the touch operation of the user is located in the non-particular touch area, and therefore does not respond to the touch operation signal. When the processor 11 identifies that an area in which the user performs an operation is located on the particular touch area, the processor 11 responds to the touch operation signal. For example, the processor 11 controls, according to the continuous-slide operation signal of the user on the particular touch area 110, a current display interface to scale down, so that the current display interface at least does not overlap the particular touch area 110. Alternatively, before the processor 11 receives the continuous-slide operation signal of the particular touch area 110, the processor 11 does not change a layout or a size of the current display interface.

Further, optionally, the continuous-slide operation of the user is received only when the particular touch area 110 is activated, to control a change of a current interface or adjust a progress of an application running in the foreground or the like. For example, a continuous slide is performed clockwise or counterclockwise on the particular touch area. When the particular touch area 110 is not activated, the particular touch area 110 may be used as a normal touch area of the display area 112 to receive a normal touch operation. The normal touch operation mentioned herein is a touch operation that can be implemented on a touch display screen in the prior art.

When or after the particular touch area 110 is activated, the processor 11 controls the current display interface to scale down, so that the display interface at least does not overlap the particular touch area 110. Alternatively, when or after the particular touch area 110 is activated, before the processor 11 receives the continuous-slide operation signal of the particular touch area 110, the processor 11 does not change the layout or the size of the current display interface. That is, the display interface that exists when or after the particular touch area 110 is activated is the same as the display interface that exists before the particular touch area 110 is activated, so that the user senses no change, and the interface is simple.

The user may activate the particular touch area 110 in the following manners. The activation manners are diversified. This embodiment is merely used as an example for description, and is not limited to these manners. A misoperation caused by unintentional touch of the user on the particular touch area 110 in a use process may be reduced by setting an activation manner for the particular touch area 110.

The user may perform a slide operation along the particular touch area 110. If the processor 12 detects that all coordinates of a track of the slide operation are within a range of the particular touch area 110 and determines that the slide track of the user is a preset slide track, the processor 12 activates the particular touch area 110 and executes an instruction corresponding to the slide operation.

Optionally, the user may activate the particular touch area 110 by tapping any point or a specified point of the particular touch area. A user finger or a touch object may not leave the tapped touch point, and slide clockwise or counterclockwise along the particular touch area by directly using the touch point as a startpoint, so that an instruction corresponding to the slide operation is executed. The processor 12 implements corresponding control according to the instruction of the slide operation.

Optionally, after the user activates the particular touch area 110 by tapping any point or a specified point of the particular touch area, a user finger or a touch object may leave the tapped touch point and the touchscreen 11 for a short time, and the short time may be preset, for example, 2s. Then the user performs continuous sliding clockwise or counterclockwise along the particular touch area within the short time, so that an instruction corresponding to the slide operation is executed. The processor 12 implements corresponding control according to the instruction of the slide operation.

It should be noted that in the process in which the user activates the particular touch area 110 by tapping any point or a specified point of the particular touch area 110, a quantity of tapping times may be preset. For example, multiple tapping manners such as single tapping and double tapping may be included. This is not limited in this embodiment.

Optionally, activation of the particular touch area 110 may be implemented by using a specified virtual key, a mechanical button, or a knob. Details are not described in this embodiment.

Optionally, the particular touch area 110 may be activated each time the wearable device 100 is powered on, and no activation operation is performed.

Optionally, the processor 12 may automatically activate the particular touch area 110 according to the display content of the touchscreen 11 or a type of an application running in the foreground, and continuously adjust at least one function of the wearable device according to the continuous slide of the user on the particular touch area 110.

For example, when identifying that the content of the current display interface is information such as an image, a web page, or a text, or determining that running application software of the current interface is an audio/video player, or that the display interface is adjusting a system time or the like, the processor 12 automatically activates the particular touch area 110. Certainly, there are other situations in which the particular touch area 110 may be automatically activated, and the situations are not listed one by one herein.

Optionally or further, the wearable device 100 may exit from the active state of the particular touch area 110 in the operation manner of activating the particular touch area 110, or may exit in another operation manner. This is not limited herein.

The processor 12 continuously adjusts at least one function of the wearable device according to the continuous-slide signal and at least in the following specific manners:

The processor 12 receives the continuous-slide signal, and parses the continuous-slide signal received in a first time segment, to obtain slide coordinates that are in the first time segment. A time between a startpoint and an endpoint of the continuous slide is divided into N time segments, where N = 1, ..., n, and n is a positive integer. The first time segment is a time segment located first in the N time segments, and a second time segment is a time segment located second in the N time segments. By analogy, an N^{th} time segment is a time segment located N^{th} in the N time segments. Time lengths of the N time segments may be equal or not equal, and each time segment may include at least one sampling coordinate.

A first adjustment instruction is executed according to a correspondence between a change of the slide coordinates obtained in the first time segment and an adjustment of a corresponding function.

The processor 12 parses the continuous-slide signal received in the second time segment, to obtain slide coordinates that are in the second time segment; and executes a second adjustment instruction according to a correspondence between a change of the slide coordinates obtained in the second time segment and an adjustment of a corresponding function.

By analogy, the processor 12 parses the continuous-slide signal in sequence until the processor 12 obtains slide coordinates that are in the N^{th} time segment, and executes an N^{th} adjustment instruction.

The executing a first adjustment instruction according to a correspondence between a change of the slide coordinates obtained in the first time segment and an adjustment of a corresponding function may be specifically: calculating a slide distance according to the slide coordinates obtained in the first time segment, and executing the first adjustment instruction according to a correspondence between the slide distance and the adjustment of the corresponding function.

Optionally, the first adjustment instruction may be executed according to a correspondence between a preset quantity of time segments and the adjustment of the corresponding function. For example, sampled coordinate data of two time segments corresponds to an adjustment of one fifth of volume.

The foregoing is merely an example of an implementation principle of continuous adjustment performed by the processor 12 on at least one function of the wearable device specifically according to the continuous-slide signal. Diversified solutions can be implemented. An actual product may be implemented in another manner. This is not limited in this embodiment.

As can be known from the above, the foregoing continuous adjustment may be understood in the following manner: The processor 12 executes an adjustment instruction of a corresponding function according to the continuous-slide signal obtained in each time segment. That is, the user dynamically and gradually adjusts a corresponding function parameter while the user performs continuous sliding, instead of executing the adjustment instruction after the continuous slide is ended.

The continuously adjusting, by the processor 12, at least one function of the wearable device according to the continuous-slide signal includes at least one of the following manners: continuously controlling to scale up/down or switch an interface according to the continuous-slide signal; continuously controlling navigation of a menu list according to the continuous-slide signal; continuously adjusting an audio/video playback progress according to the continuous-slide signal; continuously adjusting a displayed system time according to the continuous-slide signal; or the like.

The continuously adjusting, by the processor 12, at least one function of the wearable device according to the continuous-slide signal is further described below by using multiple examples, including but are not limited to the following described embodiments.

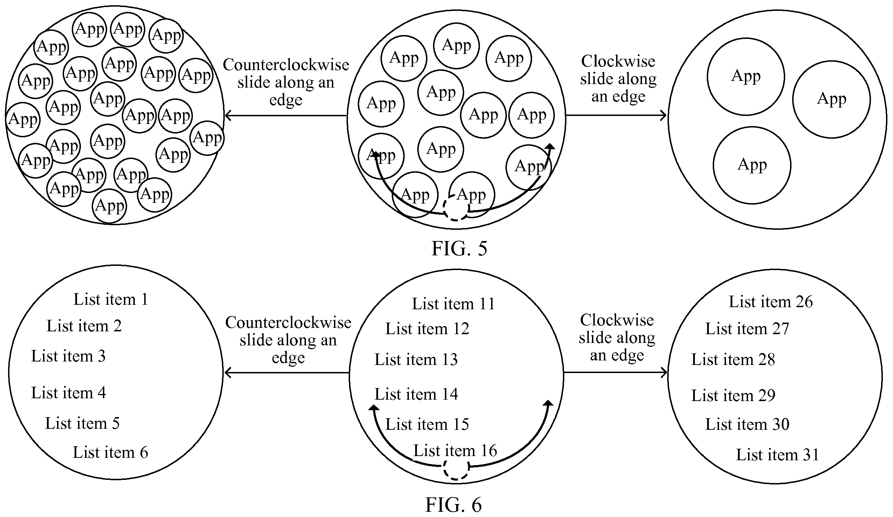

The content of the current interface may be multiple application icons, images, pages, or the like. The processor 12 scales up or down the current icons, images, or pages according to a continuous slide manner in which the user operates the particular touch area 110, for example: correspondingly scaling up the content of the current interface by sliding clockwise, and correspondingly scaling down the content of the current interface by sliding counterclockwise (as shown in FIG. 5).

Optionally or further, the processor 12 may control interface switching according to another continuous slide manner in which the user operates the particular touch area 110. For example, if the user performs single tapping and clockwise sliding on the particular touch area, a previous icon interface, image, page, or the like is switched; or if the user performs single tapping and counterclockwise sliding on the particular touch area, a next icon interface, image, page, or the like is switched.

Interface switching and interface scaling up/down may be distinguished from each other by different operation manners. For example, by default, an operation of continuously sliding on the particular touch area corresponds to interface scaling up/down; and an operation of performing single tapping and sliding on the particular touch area corresponds to interface switching. Alternatively, other differentiable operation manners are used. Multiple operation manners for distinguishing different functions exist and are not listed one by one in this embodiment.

Optionally or further, FIG. 6 is a schematic diagram of controlling menu navigation on the wearable device according to this embodiment of the present invention. The processor 12 continuously controls the navigation of a menu list according to the continuous-slide signal. For example, when determining that a currently displayed interface is a contact list, the processor 12 controls, according to a clockwise slide or counterclockwise slide performed by the user, the touchscreen 11 to scroll up or down and display the contact list, or to display names of contacts one by one in a highlighted manner according to the continuous-slide operation. The present invention may further include another situation of the menu list, and the processor 12 performs identification according to a type of a current application.

Optionally or further, when the current interface is a menu list, the processor 12 may control the current menu list to be arranged near a periphery of a display area of the touchscreen, so that each menu item has an equal distance to an edge of the display area. In this way, a quantity of menu items in one display page may increase, thereby alleviating a problem that a relatively small display interface cannot display relatively long content.

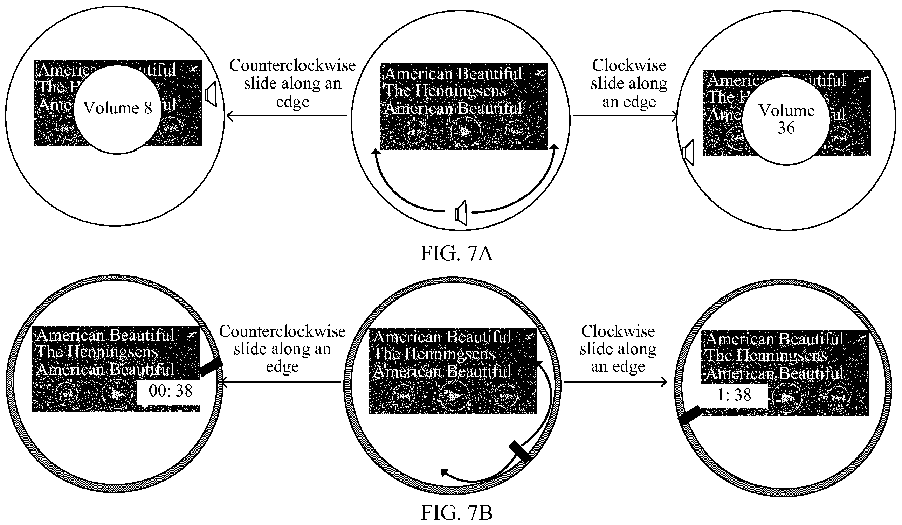

Optionally or further, the processor 12 may continuously adjust an audio/video playback progress or volume according to the continuous-slide signal. As shown in FIG. 7A and FIG. 7B, the processor 12 continuously controls the audio/video progress or volume according to different continuous-slide signals. Control over the audio/video progress or volume is distinguished according to different continuous slide manners, and this is similar to distinguishing continuous control over interface scaling up/down or switching. Details are not described herein again. There are various operation manners, which may be defined by the user or may be pre-defined by a manufacturer. This is not limited in this embodiment of the present invention. An adjustment process of the audio/video progress or volume may be displayed on the touchscreen 11 in real time. This is convenient for the user to learn of an adjustment in real time.

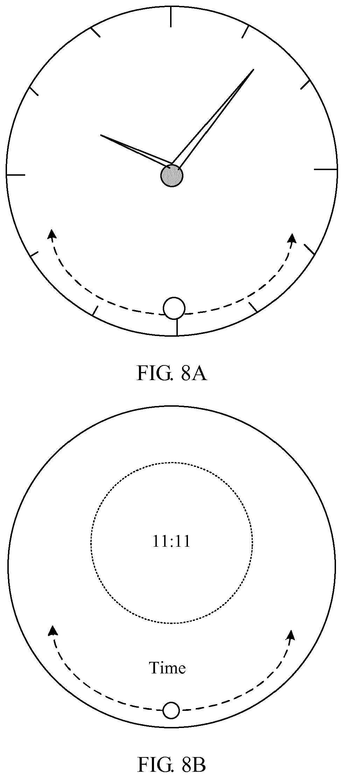

Optionally or further, the processor 12 may continuously adjust a displayed system time according to the continuous-slide signal. As shown in FIG. 8A and FIG. 8B, the processor 12 adjusts a clock hand of a virtual clock or a digital time according to a clockwise or counterclockwise slide performed by the user on the particular touch area.

It should be noted that in the foregoing embodiment, when the processor 12 continuously controls the navigation of the menu list according to the continuous-slide signal, controls the audio/video process or volume, controls interface switching or scaling up/down, or adjusts the system time, the processor 12 may control different functions on a same interface by using different slide operations.

It may be understood that as shown in FIG. 2, the wearable device 100 may further include a memory 60, which may be configured to store a software program and module. The processor 12 runs the software program and module stored in the memory 60, to implement various functional applications and data processing of the wearable device 100. The memory 60 may mainly include a program storage area and a data storage area. The program storage area may store an operating system, an application program required by at least one function (such as a sound playback function and an image display function), and the like. The data storage area may store data (such as audio data and a phone book) created according to use of the wearable device 100, and the like. In addition, the memory 60 may include a high-speed random access memory, and may also include a non-volatile memory, such as at least one magnetic disk storage device, a flash device, or another volatile solid-state storage device.

The touchscreen 11 includes a touch panel 31 and a display panel 21. The touch panel 31 may cover the display panel 21. The touch panel 31 may be configured to: receive entered touch operation information and number or character information, and generate a key signal input related to user setting and function control of the wearable device 100. The touch panel 31, also referred to as a touchscreen, may collect a touch operation of a user on or near the touch panel 31 (such as an operation of a user on or near the touch panel 31 by using any suitable object or attachment, such as a finger or a stylus), and drive a corresponding connection apparatus according to a preset program. Optionally, the touch panel 31 may include two parts: a touch detection apparatus and a touch controller. The touch detection apparatus detects a touch location of the user, detects a signal generated by the touch operation, and transfers the signal to the touch controller. The touch controller receives touch information from the touch detection apparatus, converts the touch information into touch point coordinates, and then sends the touch point coordinates to the processor 12. Moreover, the touch controller can receive and execute a command sent from the processor 12. In addition, the touch panel 31 may be a resistive, capacitive, infrared, or surface sound wave type touch panel.

The display panel 21 may be configured to display information entered by the user or information provided to the user, various menus of the wearable device 100, and information displayed after various application programs are run. The display panel 21 may be configured by using an LCD (Liquid Crystal Display, liquid crystal display), an OLED (Organic Light-Emitting Diode, organic light-emitting diode), or the like. Further, after detecting a touch operation on or near the touch panel 31, the touch panel 31 transfers the touch operation to the processor 12, so as to determine a touch event type. Then, the processor 12 provides a corresponding visual output on the display panel 21 according to the touch event type. The touch panel 31 and the display panel 21 may be integrated to implement input and output functions of the wearable device 100. However, in some embodiments, the touch panel 31 and the display panel 21 may implement the input and output functions of the wearable device 100 as two separate components.

The wearable device 100 may further include an audio unit 80. The audio unit 80 further includes an audio circuit 81 and a speaker 82. The audio circuit 81 may receive audio data, convert the audio data into an electrical signal, and transmit the electrical signal to the speaker 82, so that the speaker 82 converts the electrical signal into a sound signal, and outputs the sound signal.

The wearable device 100 may further include at least one sensor 40, which may sense human body sign data, for example, heartbeats, a blood pressure, a body temperature, and sleep, and may further detect motion data and the like.

The wearable device 100 may further include a Bluetooth module 50 and a WiFi module 90, which belong to a short distance wireless transmission technology. The wearable device 100 may help, by using the WiFi module 90, the user to receive and send emails, browse a web page, access streaming media, and the like, and provide the user with a wireless broadband access to Internet.

The wearable device 100 further includes a power source 91 (such as a battery) supplying power to various components. Preferably, the power source 91 may be logically connected to the processor 30 by using a power management system, so as to implement functions, such as charging and discharging management and energy consumption management, by using the power management system.

Although not shown, the wearable device 100 may further include a camera and the like. Details are not described herein.

The processor 12 is a control center of the wearable device 100, and connects to various parts of the wearable device by using various interfaces and lines. By running or executing the software program and/or module stored in the memory 60, and invoking data stored in the memory 60, the processor 12 performs various functions and data processing of the wearable device 100, and performs overall monitoring on the device. Optionally, the processor 12 may include one or more processing units. Preferably, the processor 12 may integrate an application processor and a modem processor. The application processor mainly processes an operating system, a user interface, an application program, and the like. The modem processor mainly processes wireless communication. It may be understood that the modem processor may be not integrated into the processor 12.

Although multiple elements of the wearable device are shown in FIG. 2, it may be understood that, they are not requisite parts of the wearable device 100, and can be completely omitted as required without changing the essence of the present invention.

### Embodiment 2

The foregoing embodiment is an entity hardware embodiment of the present invention. An embodiment of a touch operation method for the wearable device is generally described below based on the entity hardware embodiment. For an implementation solution of the method embodiment, refer to the foregoing entity hardware embodiment. A detailed implementation solution of the method embodiment is not described herein.

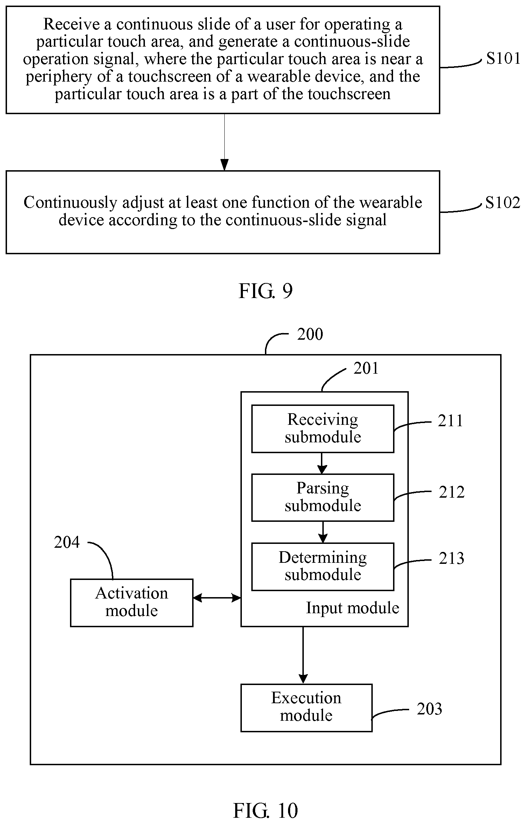

FIG. 9 is a flowchart of the touch operation method for the wearable device according to this embodiment of the present invention.

This embodiment provides a touch operation method for a wearable device. The method includes the following steps:
Step 101: Receive a continuous slide for operating a particular touch area, and generate a continuous-slide signal, where the particular touch area is near a periphery of a touchscreen of the wearable device, and the particular touch area is a part of the touchscreen.
Step 102: Continuously adjust at least one function of the wearable device according to the continuous-slide signal.

In this embodiment of the present invention, a particular touch area is disposed around a touchscreen, so that the wearable device conforms to an operation habit of a user, and a length of a control area is maximized. It is convenient for the user to continuously adjust a corresponding function more accurately.

Specifically, the receiving a continuous slide for operating a particular touch area includes:
receiving a slide operation of a user, and generating a slide operation signal;
parsing the slide operation signal, to obtain slide coordinates; and
determining, according to the slide coordinates, that the user performs a continuous-slide operation on the particular touch area.

Optionally, before the receiving a continuous slide for operating a particular touch area, the method includes: controlling the wearable device to disable a touch function of a non-particular touch area.

The particular touch area is a closed or semi-closed area surrounding the periphery of the touchscreen of the wearable device. The particular touch area is disposed outside an edge of a display area of the touchscreen, and the particular touch area does not display content.

Alternatively, the particular touch area is disposed inside an edge of a display area of the touchscreen, and the particular touch area displays content.

It should be noted that the particular touch area is a part of the touchscreen, and approximately occupies a half, one third, a quarter, or the like of the touchscreen. This is defined by a manufacturer.

Before step 102, the method further includes: activating the particular touch area. The activating the particular touch area includes at least one of the following manners: when determining that a slide track of the user is a specified slide track on the particular touch area, activating the particular touch area; when determining that a startpoint of a slide track of the user is a specified point and coordinates of the slide track are located on the particular touch area, activating the particular touch area; activating the particular touch area by tapping any point or a specified location of the particular touch area for a specified quantity of times; when determining that a specified virtual key or a mechanical button is pressed, activating the particular touch area; or automatically activating the particular touch area during power-on.

Further, the continuously adjusting at least one function of the wearable device according to the continuous-slide signal includes at least one of the following manners: continuously controlling to scale up/down or switch content on an interface according to the continuous-slide signal; continuously controlling navigation of a menu list according to the continuous-slide signal; continuously adjusting an audio/video playback progress or volume according to the continuous-slide signal; or continuously adjusting a displayed system time according to the continuous-slide signal.

When continuously controlling the navigation of the menu list according to the continuous-slide signal, the processor 12 controls the current menu list to be arranged near the periphery of the display area of the touchscreen, so that each menu item has an equal distance to an edge of the display area (as shown in FIG. 6). In this way, a quantity of menu items in one display page may increase, thereby alleviating a problem that a relatively small display interface cannot display relatively long content.

It should be noted that for a more detailed technical solution of the touch operation method for the wearable device in this embodiment, reference may be made to all content in Embodiment 1.

### Embodiment 3

FIG. 10 is a module diagram of a wearable device according to an embodiment of the present invention.

This embodiment provides a wearable device 200. A further description is given based on the steps of the method in Embodiment 2. A detailed solution includes the content of either of the foregoing embodiments. Reference may be made to each other.

The wearable device 200 includes an input module 201 and an execution module 203. The input module 201 is connected to the execution module 203.

The input module 201 is configured to: receive a continuous slide for operating a particular touch area, and generate a continuous-slide signal. The particular touch area is near a periphery of a touchscreen of the wearable device, and the particular touch area is a part of the touchscreen.

The execution module 203 is configured to continuously adjust at least one function of the wearable device according to the continuous-slide signal.

The input module further includes: a receiving submodule 211, a parsing submodule 212, and a determining submodule 213. The receiving submodule 211 receives a slide operation of a user, and generates a slide operation signal. The parsing submodule 212 parses the slide operation signal, to obtain slide coordinates. The determining submodule 213 determines, according to the slide coordinates, that the user performs a continuous-slide operation on the particular touch area.

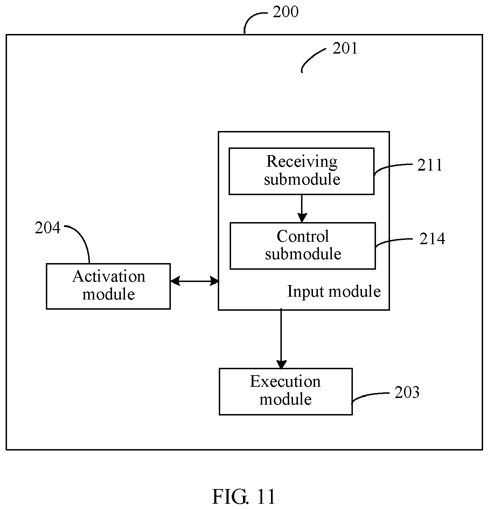

Optionally, as shown in FIG. 11, the input module 201 may further include the receiving submodule 211 and a control submodule 214. The control submodule 214 is configured to: before the input module 201 receives the continuous slide for operating the particular touch area, control the wearable device to disable a touch function of a non-particular touch area. Activation modules 204 in FIG. 10 and FIG. 11 are not necessary. This is not specifically limited in this embodiment.

Specifically, the particular touch area is a closed or semi-closed area surrounding the periphery of the touchscreen of the wearable device.

The particular touch area is disposed outside an edge of a display area of the touchscreen, and the particular touch area does not display content.

Alternatively, the particular touch area is disposed inside an edge of a display area of the touchscreen, and the particular touch area displays content.

Further or optionally, the wearable device 200 may further include the activation module 204. The activation module 204 is configured to activate the particular touch area. The activation module 204 activates the particular touch area according to an input operation of the user, and the activation module activates the particular touch area in one of the following manners: when determining that a slide track of the user is a specified slide track on the particular touch area, activating the particular touch area; when determining that a startpoint of a slide track of the user is a specified point and coordinates of the slide track are located on the particular touch area, activating the particular touch area; activating the particular touch area by tapping any point or a specified location of the particular touch area for a specified quantity of times; when determining that a specified virtual key or a mechanical button is pressed, activating the particular touch area; or automatically activating the particular touch area during power-on.

Further, the continuously adjusting, by the execution module 203, at least one function of the wearable device according to the continuous-slide signal includes at least one of the following manners: continuously controlling, by the execution module, to scale up/down or switch content on an interface according to the continuous-slide signal; continuously controlling, by the execution module, navigation of a menu list according to the continuous-slide signal; continuously adjusting, by the execution module, an audio/video playback progress or volume according to the continuous-slide signal; or continuously adjusting a displayed system time according to the continuous-slide signal.

When continuously controlling the navigation of the menu list according to the continuous-slide signal, the execution module 203 controls the current menu list to be arranged near the periphery of the display area of the touchscreen, so that each menu item has an equal distance to an edge of the display area (as shown in FIG. 6). In this way, a quantity of menu items in one display page may increase, thereby alleviating a problem that a relatively small display interface cannot display relatively long content.

According to the wearable device in this embodiment, interface display and an application progress are controlled in diversified manners according to a touch operation of a user on a particular touch area. This conforms to an operation habit of a user and improves accuracy of user control.

### Embodiment 4

This embodiment provides a touch display screen. The touch display screen is abbreviated as a touchscreen below, and may be applied to the wearable device 100 in Embodiment 1. The touch display screen receives a continuous slide for operating a particular touch area, and generates a continuous-slide signal. The particular touch area is near a periphery of the touchscreen, and the particular touch area is a part of the touchscreen. Therefore, the wearable device 100 continuously adjusts at least one function of the wearable device according to the continuous-slide signal.

The particular touch area is near the periphery of the touchscreen, and the particular touch area is a part of the touchscreen.

Specifically, the particular touch area is a closed or semi-closed area surrounding the periphery of the touchscreen. The particular touch area is disposed outside an edge of a display area of the touchscreen, and the particular touch area does not display content.

Alternatively, the particular touch area is disposed inside an edge of a display area of the touchscreen, and the particular touch area displays content.

It may be understood that the touch display screen in this embodiment may be provided with a processor or may be connected to an external processor of a wearable device, or may include another necessary element. The solution in Embodiment 1 is used as an execution solution of the processor. Details are not described in this embodiment herein again.

According to the touch display screen in this embodiment, interface display and an application progress are controlled in diversified manners according to a touch operation of a user on a particular touch area. This conforms to an operation habit of the user and improves accuracy of user control.

### Embodiment 5

Based on the technical solution of any one of the foregoing embodiments, this embodiment provides a graphical user interface GUI of a wearable device. The architecture and the execution solution of Embodiment 1 may be used for the wearable device in this embodiment. The wearable device includes at least a touchscreen and at least one processor. The processor controls display of the touchscreen 11. A periphery of the touchscreen 11 is provided with a particular touch area 110, and the particular touch area is a part of the touchscreen. The processor 12 receives, by using the touchscreen 11, a continuous slide for operating the particular touch area, and generates a continuous-slide signal. The processor controls a continuous display change of the GUI according to the continuous-slide signal.

The particular touch area is a closed or semi-closed area surrounding the periphery of the touchscreen of the wearable device.

The controlling a display change of the GUI according to the continuous-slide signal includes at least one of the following manners: continuously controlling to scale up/down or switch content on an interface according to the continuous-slide signal; continuously controlling navigation of a menu list according to the continuous-slide signal; continuously adjusting an audio/video playback progress or volume according to the continuous-slide signal; or continuously adjusting a displayed system time according to the continuous-slide signal.

When continuously controlling the navigation of the menu list according to the continuous-slide signal, the processor controls the current menu list to be arranged near the periphery of the display area of the touchscreen, so that each menu item has an equal distance to an edge of the display area (as shown in FIG. 6). In this way, a quantity of menu items in one display page may increase, thereby alleviating a problem that a relatively small display interface cannot display relatively long content.

According to the graphical user interface GUI of a wearable device in this embodiment, a change of a display interface is controlled according to a user operation instruction for operating a particular touch area. This conforms to a using habit of the user, and an interface is controlled to change more precisely.

In another embodiment, a system may be a computer readable storage medium storing one or more programs. The one or more programs include an instruction. When executed by the wearable device, the instruction executes the following events. The wearable device includes a touchscreen and a processor.

The touchscreen receives a continuous slide for operating a particular touch area, and generates a continuous-slide signal. The particular touch area is near a periphery of the touchscreen of the wearable device, and the particular touch area is a part of the touchscreen. The processor continuously adjusts at least one function of the wearable device according to the continuous-slide signal.

In another embodiment, the system may be a computer program. The one or more programs include an instruction. When executed by the wearable device, the instruction executes the following events. The wearable device includes a touchscreen and a processor.

The touchscreen receives a continuous slide for operating a particular touch area, and generates a continuous-slide signal. The particular touch area is near a periphery of the touchscreen of the wearable device, and the particular touch area is a part of the touchscreen. The processor continuously adjusts at least one function of the wearable device according to the continuous-slide signal.

For an implementation solution, refer to the implementation manner of Embodiment 1. Details are not described in this embodiment herein again.

It should be noted that the embodiments of the present invention are not isolated from each other. For technical solutions, refer to each other. No repeated description is given to avoid repetition and redundancy.

In combination with the steps of methods and modules described in the embodiments disclosed by the specification, implementation may be performed through electronic hardware or a combination of computer software and hardware. The above description already generally describes the steps and contents of each embodiment according to functions. Whether the functions are performed by hardware or software and hardware depends on particular applications and design constraint conditions of the technical solutions. A person of ordinary skill in the art may use different methods to implement the described functions for each particular application, but it should not be considered that the implementation goes beyond the scope of the present invention.

Methods or steps described in the embodiments disclosed in this specification may be implemented by hardware, a software program executed by a processor, or a combination thereof. The software program may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The present invention is described in detail with reference to the accompany drawings and in combination with the examples of the embodiments, but the present invention is not limited thereto. Various equivalent modifications or replacements can be made to the embodiments of the present invention by a person of ordinary skill in the art without departing from the spirit and essence of the present invention, and the modifications or replacements shall fall within the scope of the present invention.

## Claims

1. A touch operation method for a wearable device, wherein the method comprises:
receiving a continuous slide for operating a particular touch area, and generating a continuous-slide signal, wherein the particular touch area is near a periphery of a touchscreen of the wearable device, and the particular touch area is a part of the touchscreen; and
continuously adjusting at least one function of the wearable device according to the continuous-slide signal.

2. The method according to claim 1, wherein the receiving a continuous slide for operating a particular touch area comprises:
receiving a slide operation of a user, and generating a slide operation signal;
parsing the slide operation signal, to obtain slide coordinates; and
determining, according to the slide coordinates, that the user performs a continuous-slide operation on the particular touch area.

3. The method according to claim 1, before the receiving a continuous slide for operating a particular touch area, comprising: controlling the wearable device to disable a touch function of a non-particular touch area.

4. The method according to any one of claims 1 to 3, wherein the particular touch area is a closed or semi-closed area surrounding the periphery of the touchscreen of the wearable device.

5. The method according to any one of claims 1 to 4, wherein the particular touch area is disposed outside an edge of a display area of the touchscreen, and the particular touch area does not display content; or
the particular touch area is disposed inside an edge of a display area of the touchscreen, and the particular touch area displays content.

6. The method according to any one of claims 1 to 5, wherein before the receiving a continuous slide for operating a particular touch area, the method further comprises: activating the particular touch area according to an input operation of the user, wherein the activating the particular touch area comprises one of the following manners: when determining that a slide track of the user is a specified slide track on the particular touch area, activating the particular touch area; when determining that a startpoint of a slide track of the user is a specified point and coordinates of the slide track are located on the particular touch area, activating the particular touch area; activating the particular touch area by tapping any point or a specified location of the particular touch area for a specified quantity of times; when determining that a specified virtual key or a mechanical button is pressed, activating the particular touch area; or automatically activating the particular touch area during power-on.

7. The method according to any one of claims 1 to 6, wherein the continuously adjusting at least one function of the wearable device according to the continuous-slide signal comprises at least one of the following manners: continuously controlling to scale up/down or switch content on an interface according to the continuous-slide signal; continuously controlling navigation of a menu list according to the continuous-slide signal; continuously adjusting an audio/video playback progress or volume according to the continuous-slide signal; or continuously adjusting a displayed system time according to the continuous-slide signal.

8. A wearable device, wherein the wearable device comprises:
an input module, configured to: receive a continuous slide for operating a particular touch area, , wherein the particular touch area is near a periphery of a touchscreen of the wearable device, and the particular touch area is a part of the touchscreen; and
an execution module, configured to continuously adjust at least one function of the wearable device according to the continuous-slide signal.

9. The wearable device according to claim 8, wherein the input module further comprises: a receiving submodule, a parsing submodule, and a determining submodule, wherein
the receiving submodule receives a slide operation of a user, and generates a slide operation signal;
the parsing submodule parses the slide operation signal, to obtain slide coordinates; and
the determining submodule determines, according to the slide coordinates, that the user performs a continuous-slide operation on the particular touch area.

10. The wearable device according to claim 8, wherein the input module further comprises a control submodule, wherein the control submodule is configured to: before the input module receives the continuous slide for operating the particular touch area, control the wearable device to disable a touch function of a non-particular touch area.

11. The wearable device according to any one of claims 8 to 10, wherein the particular touch area is a closed or semi-closed area surrounding the periphery of the touchscreen of the wearable device.

12. The wearable device according to any one of claims 8 to 11, wherein the particular touch area is disposed outside an edge of a display area of the touchscreen, and the particular touch area does not display content; or
the particular touch area is disposed inside an edge of a display area of the touchscreen, and the particular touch area displays content.

13. The wearable device according to any one of claims 8 to 12, wherein the wearable device further comprises an activation module, wherein the activation module activates the particular touch area according to an input operation of the user, and the activation module activates the particular touch area in one of the following manners: when determining that a slide track of the user is a specified slide track on the particular touch area, activating the particular touch area; when determining that a startpoint of a slide track of the user is a specified point and coordinates of the slide track are located on the particular touch area, activating the particular touch area; activating the particular touch area by tapping any point or a specified location of the particular touch area for a specified quantity of times; when determining that a specified virtual key or a mechanical button is pressed, activating the particular touch area; or automatically activating the particular touch area during power-on.

14. The wearable device according to any one of claims 8 to 13, wherein the continuously adjusting, by the execution module, at least one function of the wearable device according to the continuous-slide signal comprises at least one of the following manners: continuously controlling, by the execution module, to scale up/down or switch content on an interface according to the continuous-slide signal; continuously controlling, by the execution module, navigation of a menu list according to the continuous-slide signal; continuously adjusting, by the execution module, an audio/video playback progress or volume according to the continuous-slide signal; or continuously adjusting a displayed system time according to the continuous-slide signal.

15. A wearable device, wherein the wearable device comprises a processor and a touchscreen, wherein the touchscreen is connected to the processor by using a data bus; and the touchscreen receives a continuous slide for operating a particular touch area, and generates a continuous-slide signal, wherein the particular touch area is near a periphery of the touchscreen of the wearable device, and the particular touch area is a part of the touchscreen; and the processor continuously adjusts at least one function of the wearable device according to the continuous-slide signal.

16. The wearable device according to claim 15, wherein the touchscreen receives a slide operation of a user; and the processor parses the slide operation signal, to obtain slide coordinates, and determines, according to the slide coordinates, that the user performs a continuous-slide operation on the particular touch area.

17. The wearable device according to claim 15, wherein before the touchscreen receives the continuous slide for operating the particular touch area, the processor disables a touch function of a non-particular touch area of the touchscreen.

18. The wearable device according to any one of claims 15 to 17, wherein the particular touch area is a closed or semi-closed area surrounding the periphery of the touchscreen of the wearable device.

19. The wearable device according to any one of claims 15 to 18, wherein the particular touch area is disposed outside an edge of a display area of the touchscreen, and the particular touch area does not display content; or
the particular touch area is disposed inside an edge of a display area of the touchscreen, and the particular touch area displays content.

20. The wearable device according to any one of claims 15 to 19, wherein the processor further activates the particular touch area according to a touch operation of the user, wherein the activating the particular touch area comprises one of the following manners: when determining that a slide track of the user is a specified slide track on the particular touch area, activating the particular touch area; when determining that a startpoint of a slide track of the user is a specified point and coordinates of the slide track are located on the particular touch area, activating the particular touch area; activating the particular touch area by tapping any point or a specified location of the particular touch area for a specified quantity of times; when determining that a specified virtual key or a mechanical button is pressed, activating the particular touch area; or automatically activating the particular touch area during power-on.

21. The wearable device according to any one of claims 15 to 20, wherein the continuously adjusting, by the processor, at least one function of the wearable device according to the continuous-slide signal comprises at least one of the following manners: continuously controlling, by the processor, to scale up/down or switch content on an interface according to the continuous-slide signal; continuously controlling navigation of a menu list according to the continuous-slide signal; continuously adjusting an audio/video playback progress according to the continuous-slide signal; or continuously adjusting a displayed system time according to the continuous-slide signal.

22. A computer program, wherein the computer program comprises an instruction, wherein the instruction enables the wearable device to execute the method according to any one of claims 1 to 7.

23. A graphical user interface GUI of a wearable device, wherein the wearable device receives a user operation of continuous sliding on a particular touch area, wherein the particular touch area is near a periphery of a touchscreen of the wearable device, and the particular touch area is a part of the touchscreen; and
the wearable device continuously controls a continuous display change of the GUI according to the continuous-slide signal.

24. The GUI according to claim 23, wherein the continuously controlling, by the wearable device, a continuous display change of the GUI according to the continuous-slide signal comprises at least one of the following manners: controlling to continuously scale up/down or switch content on the interface according to the continuous-slide signal; controlling continuous navigation of a menu list according to the continuous-slide signal; controlling to continuously prompt an audio/video playback progress or to continuously prompt an adjustment of an audio/video playback volume according to the continuous-slide signal; or continuously controlling, according to the continuous-slide signal, a continuous adjustment process of a displayed system time.

25. The GUI according to claim 23 or 24, wherein when the wearable device continuously controls the navigation of the menu list according to the continuous-slide signal, the wearable device controls the current menu list to be arranged near a periphery of a display area of the touchscreen, so that each menu item has an equal distance to an edge of the display area.

26. The GUI according to any one claims 23 to 25, wherein the particular touch area is disposed outside the edge of the display area of the touchscreen, and the particular touch area does not display content; or
the particular touch area is disposed inside the edge of the display area of the touchscreen, and the particular touch area displays content.

27. A touchscreen, wherein the touchscreen is applied to a wearable device, and the touchscreen is provided with a particular touch area, wherein the particular touch area is near a periphery of the touchscreen, and the particular touch area is a part of the touchscreen; and
the touchscreen receives a continuous slide for operating the particular touch area, and generates a continuous-slide signal, so that the wearable device continuously adjusts at least one function of the wearable device according to the continuous-slide signal.

28. The touchscreen according to claim 27, wherein the particular touch area is a closed or semi-closed area surrounding the periphery of the touchscreen.

29. The touchscreen according to claim 27 or 28, wherein the particular touch area is disposed outside an edge of a display area of the touchscreen, and the particular touch area does not display content; or
the particular touch area is disposed inside an edge of a display area of the touchscreen, and the particular touch area displays content.
